# EUROPEAN PATENT APPLICATION

(11) **EP 1 993 097 A1**
(43) Date of publication of application: **19.11.2008**
(21) Application number: 08009110.1
(22) Date of filing: 16.05.2008
(51) Int. Cl.: G11B 27/10, G11B 27/34, H04M 1/725, G06F 3/048, H04N 5/445

(54) **Mobile communication device and method of controlling the same**

(30) Priority: 18.05.2007 KR 20070048656
(71) Applicant: LG Electronics Inc., Seoul 150-010 (KR)
(72) Inventor: Jeong, Kye Sook, Seoul 153-023 (KR); Min, Zee Young, Seoul 153-023 (KR); Chang, Ji Na, Seoul 153-023 (KR); Song, Yoo Mee, Seoul 153-023 (KR)
(74) Representative: Katérle, Axel

(57) **Abstract**

A mobile communication device, a computer program product, and a method of controlling the same are provided. The method includes displaying a list of multimedia files that can be played on a screen of a first display unit; selecting a multimedia file from the list; and playing the selected multimedia file and displaying information regarding the progress of play of the selected multimedia file on the screen of the second display unit. Accordingly, it is possible to enable a user to easily and effectively control the play of a multimedia file by displaying a list of multimedia files that can be played on the screen of a first display unit and displaying a menu or icon for controlling the play of the multimedia file on the screen of a second display unit.

## Description

### CROSS REFERENCE TO RELATED APPLICATIONS

This application claims priority from Korean Patent Application No. 10-2007-0048656 filed on May 18, 2007 in the Korean Intellectual Property Office, the disclosure of which is incorporated herein by reference in its entirety.

### BACKGROUND OF THE INVENTION

### 1. Field of the Invention

The present invention relates to a mobile communication device, a computer program product, and a method of controlling the same in which the play of a multimedia file can be easily controlled using two display units.

### 2. Description of the Related Art

Due to recent improvements in the performance of mobile communication devices and the advent of various mobile platforms, mobile communication devices have become able to provide not only basic functions such as voice call and Short Message Service (SMS) functions but also various additional service functions. In particular, the types of additional functions that can be provided by mobile communication devices have diversified in accordance with the commercialization of mobile communication devices capable of reproducing multimedia files and performing a wireless Internet access function.

In the case of playing a multimedia file using a mobile communication device, it is possible to use a progress bar to provide information regarding the progress of the play of the multimedia file such as a remaining play time of the multimedia file, and to use one or more input keys to control the play of the multimedia file.

However, in the case of controlling the play of a multimedia file simply using only one display unit and input keys, it is highly likely for a user to encounter a need for frequent scene changes for the purpose of, for example, selecting and playing other multimedia files. In addition, it is difficult for a user to intuitively recognize the locations and functions of input keys necessary for controlling the play of multimedia files. Mobile communication devices equipped with a full touch screen which can serve as both an input device and a display device can easily control the play of multimedia files. However, full touch screens are highly susceptible to damage, and the manufacturing cost of full touch screens is generally high.

Therefore, it is necessary to develop techniques of effectively controlling the play of multimedia files by a mobile communication device.

### SUMMARY OF THE INVENTION

The present invention provides a mobile communication device, a computer program product, and a method of controlling the same in which the play of a multimedia file can be effectively controlled using two display units.

According to an aspect of the present invention, there is provided a computer program product and a method of controlling a mobile communication device, the method including displaying a list of multimedia files that can be played on a screen of a first display unit; selecting a multimedia file from the list; and playing the selected multimedia file and displaying information regarding the progress of play of the selected multimedia file on the screen of the second display unit.

According to another aspect of the present invention, there is provided a mobile communication device including a first display unit which displays a list of multimedia files that can be played; a second display unit; and a control unit which controls a multimedia file selected from the list to be played and controls the second display unit to display information regarding the progress of play of the selected multimedia file.

### BRIEF DESCRIPTION OF THE DRAWINGS

The above and other features and advantages of the present invention will become more apparent by describing in detail preferred embodiments thereof with reference to the attached drawings in which:

FIGS. 1 and 2 illustrate the exterior of a mobile communication device according to an embodiment of the present invention;

FIG. 3 is a block diagram of the mobile communication device illustrated in FIGS. 1 and 2;

FIG. 4 is a flowchart illustrating a method of controlling a mobile communication device according to an embodiment of the present invention; and

FIGS. 5 through 7 illustrate screen images for explaining the method illustrated in FIG. 4.

### DETAILED DESCRIPTION OF THE INVENTION

The present invention will hereinafter be described in detail with reference to the accompanying drawings in which exemplary embodiments of the invention are shown.

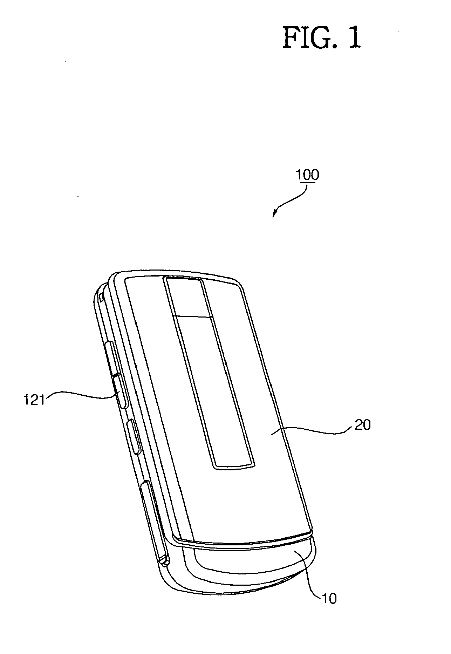

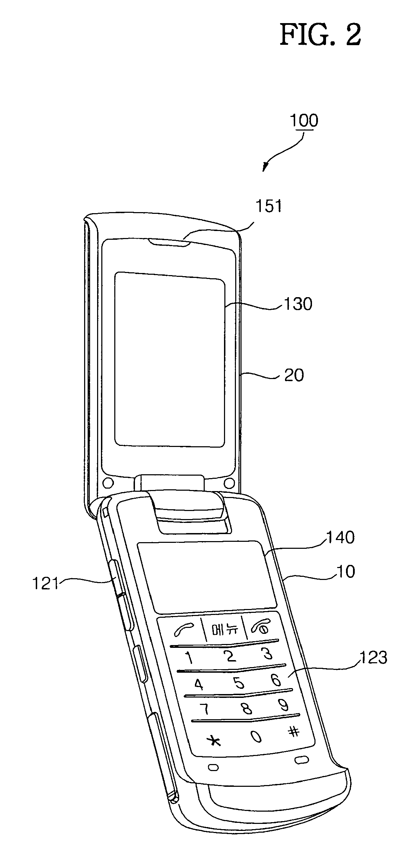

FIGS. 1 and 2 illustrate the exterior of a mobile communication device 100 according to an embodiment of the present invention. Referring to FIGS. 1 and 2, the mobile communication device 100 includes a main body 10 and a folder 20 which is connected to the main body 10 so as to be able to be opened up or shut.

FIG. 1 illustrates the situation when the folder 20 is shut, and FIG. 2 illustrates the situation when the folder 20 is opened up. A speaker 151 and a first display unit 130 are disposed on an inner surface of the folder 20. A second display unit 140 is disposed at the main body 10. In another embodiment, the first display unit 130 and the second display unit 140 may be disposed on common surfaces, or on different surfaces, of a common body.

The first display unit 130 may include a liquid crystal display (LCD), and the second display unit 140 may include a touch screen and may thus serve as both an input device and a display device. A touch screen responds upon being touched by a user. If the second display unit 140 includes a touch screen, the second display unit 140 may perform a control function desired by a user when the user touches an icon or menu displayed on the screen of the second display unit 140. The first display unit 130 may also include a touch screen.

The main body 10 includes a keypad 123. The keypad 123 includes keys for making or receiving a call or for terminating a call, menu keys and number keys. A manipulation key 121 is disposed on one side of the main body 10. The manipulation key 121 may be used to increase a volume level and to perform a camera function. A user may input an operation command or data to the mobile communication device 100 by opening up the folder 20 and then manipulating the keypad 123.

The embodiment of FIGS. 1 and 2 has been described, taking a folder-type mobile communication device as an example. However, the embodiment of FIGS. 1 and 2 may be applied to a slider-type mobile communication device. In this case, the first display unit 130 may be disposed at a cover of a slider-type mobile communication device, and the second display unit 140 may be disposed at a main body of the slider-type mobile communication device.

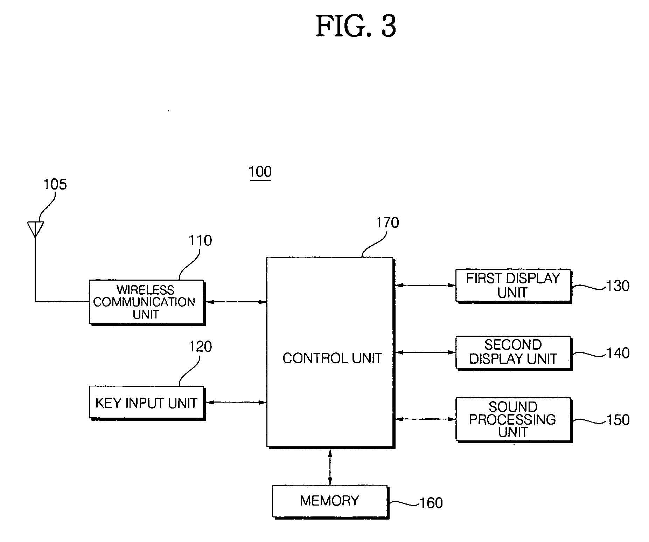

FIG. 3 is a block diagram of the mobile communication device 100 illustrated in FIGS. 1 and 2. Referring to FIG. 3, the mobile communication device 100 includes a wireless communication unit 110, a key input unit 120, the first display unit 130, the second display unit 140, a sound processing unit 150, a memory 160, and a control unit 170.

The wireless communication unit 110 provides an interface for wireless communication with a base station through an antenna 105. The wireless communication unit 110 may also include a duplex filter for filtering a signal received through the antenna 105, a power amplifier for amplifying a transmit signal, a frequency up-conversion circuit in a transmission path, and a frequency down-conversion circuit in a reception path.

The key input unit 120 may include the keypad 123 and the manipulation key 121. The key input unit 120 may transmit a signal corresponding to a key hit by a user and may thus receive an operation command or data from the user.

The first display unit 130 may include an LCD. The first display unit 130 may display a menu for controlling an operation of the mobile communication device 100, information regarding a state of reception of a signal during a call, battery information, and information regarding an operating state of the mobile communication device 100 that varies in response to a command input by the user. The first display unit 130 may also display a list of multimedia files that can be played or an image selected by the user when the user selects a multimedia play menu.

The second display unit 140 may include a touch screen. The second display unit 140 may serve as an input device for receiving an operation command and data from the user. The second display unit 140 may also serve as a display device for displaying information regarding the progress of play of a multimedia file. If the second display unit 140 includes a touch screen, the touch screen may be wide enough to display information regarding the progress of play of a multimedia file.

If the second display unit 140 includes a touch screen, the second display unit 140 may also include a touch screen panel and a touch screen panel controller. The touch screen panel is a transparent panel that can be attached onto the exterior of the mobile communication device 100. The touch screen panel determines whether the touch screen second display unit 140 has been touched by the user. If it is determined that the second display unit 140 has been touched, the touch screen panel may transmit to the touch screen panel controller a signal corresponding to a touch input made by the user. Then, the touch screen panel controller processes the signal transmitted by the touch screen panel, and transmits data obtained by the processing to the control unit 170. Then, the control unit 170 may determine whether the second display unit 140 has been touched by the user and which part of the second display unit 140 has been touched based on the data transmitted by the touch screen panel controller.

The sound processing unit 150 may amplify a sound signal output by the control unit 170 and output the amplified signal to a speaker (not shown). Also, the sound processing unit 150 may play audio from a music file or video selected by the user and output the audio through the speaker.

The memory unit 160 stores programs and data needed for the operation of the mobile communication device 100 and various data that the user wishes to store in the memory unit 160. If the second display unit 140 includes a touch screen, the memory unit 160 may also store a software driver for controlling a touch screen.

The control unit 170 generally controls the operation of the mobile communication device 100 by controlling the operations of the wireless communication unit 110, the key input unit 120, the first display unit 130, the second display unit 140, and the sound processing unit 150. More specifically, if the user selects the multimedia play menu, the control unit 170 may control the first display unit 130 to display a list of multimedia files that can be played, and control the second display unit 140 to display information regarding the progress of play of a multimedia file selected by the user.

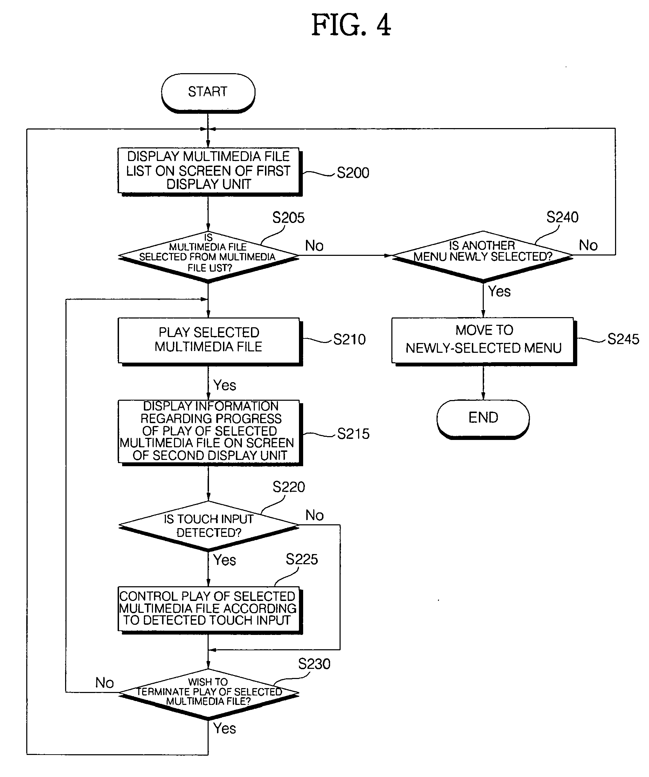

FIG. 4 is a flowchart illustrating a method of controlling a mobile communication device according to an embodiment of the present invention. Referring to FIG. 4, when a user selects a multimedia play menu, the control unit 170 controls the first display unit 130 to display a list of multimedia files that can be played (S200). If the user selects a multimedia file from the list displayed by the first display unit 130 (S205), the control unit 170 controls the selected multimedia file to be played (S210). If the user selects another menu, instead of selecting a multimedia file from the list displayed by the first display unit 130 (S240), the control unit 170 directs the user to the selected menu (S245).

The control unit 170 controls the second display unit 140 to display information regarding the progress of play of the selected multimedia file (S215). More specifically, the second display unit 140 may display information regarding the progress of play of the selected multimedia file using a progress bar, and may also display one or more control icons for controlling the play of the selected multimedia file such as icons for initiating or terminating the play of the selected multimedia file. If a touch input is received from the user, the control unit 170 controls the play of the selected multimedia file according to the touch input. In other words, if a touch or a touch-and-drag motion is detected from a progress bar, the control unit 170 may move a play or playback position of the selected multimedia file back and forth according to the touch or touch-and-drag motion. Alternatively, the control unit 170 may terminate the play of the selected multimedia file upon detecting a touch input from a control icon displayed by the second display unit 140.

The progress bar may include multiple colors (e.g., one color indicating a media portion already played, another color indicating a media portion yet to be played, and another color indicated a media portion previously played but that will be played again in response to a reverse operation.)

The progress bar may be a three dimensional display, with a media portion already played represented by an elevated bar, a media portion to be played by a recessed bar, and a media portion previously played but that will be played again in response to a reverse operation represented by a bar that neither elevated nor recessed. Other combinations are possible.

In another embodiment, the progress of play may be shown via an icon whose shape changes in accordance with the progress of play. For example, the icon may be circle have a radius that rotates, thus filling the circle, as play progresses. Other shapes or icons may be used to represent progress of play.

In another embodiment, the shape may be adjusted to adjust the progress of play (e.g., rotating a finger along the circumference of the circle previously described to move the play position forward or backward). Other shapes or icons may be used to control forward or backward play through user touches.

Also, the device may be sensitive to different types of touches. That is, a slow swipe may move the play position in concert with the swipe, whereas a faster swipe may initiate a fast forward/fast reverse action that is stopped upon tapping the display. Other methods of fast forward/reverse may be implemented.

Also, graphical progress of play displays may be accompanied by alphanumeric displays (e.g., a percentage of play or a time play duration display).

Operations S210 through S230 may be performed repeatedly until the play of the selected multimedia file is completed. If the play of the selected multimedia file is completed (S230), the method returns to operation S200.

The graphical display may also be used to select a portion of a media file for copying (e.g., a beginning and end of a subset of the file may be selected by tapping, or by tapping-sliding-tapping; with a copy command executed via exploiting a window or a button control). The copied portion may then be saved as a new file, or may be copied into another file.

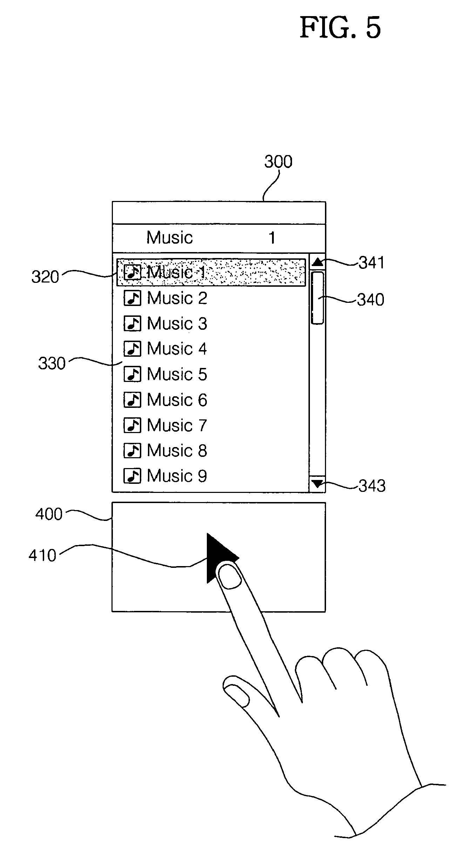

FIGS. 5 through 7 illustrate screen images for explaining the method illustrated in FIG. 4. More specifically, FIG. 5 illustrates a screen 300 of the first display unit 130 and a screen 400 of the second display unit 140. Referring to FIG. 5, a multimedia file list 330 including a plurality of music files Music 1 through Music 9 is displayed on the screen 300. The multimedia file list 330 is illustrated in FIG. 5 as being a music file list. Reference numeral 320 indicates a music file (hereinafter referred to as the current music file) currently being selected. Reference numeral 320 may also be a video file.

A vertical scroll bar 340 for scrolling up and down the multimedia file list 330 and scroll arrows 341 and 343 are displayed on a right side of the multimedia file list 330. A play icon 410, which is triangular, is displayed on the screen 400. When the play icon 410 is selected by being touched by a user, the play of the current music file 320 begins.

Also, the list shown on the first display may be used to create a play list. That is, an operator may select a subset of files from the list of media files displayed on the first display. The operator may scroll through the list and arrange an order of play of the media files by selecting and ordering files on the first display (via a touch/dragging or another operation). This subset will be treated as a play list represented by the bar or icon of the second display that has been previously described. The media files that comprise the play list will be highlighted on the first display, or otherwise discriminated from files not selected to be a part of the play list.

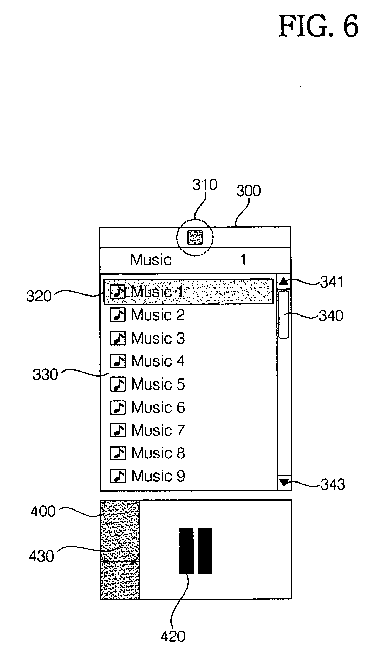

FIG. 6 illustrates the situation during the play of the current music file 320. Referring to FIG. 6, a progress bar 430 is displayed on the screen 400. The size of the progress bar 430 gradually varies according to the progress of play of the current music file 320. A stop icon 420 is also displayed on the screen 400. The stop icon 420 may be used to terminate the play of the current music file 320. An icon 310 indicating that the progress bar 430 is currently being displayed on the screen 400 is displayed on an upper part of the screen 300.

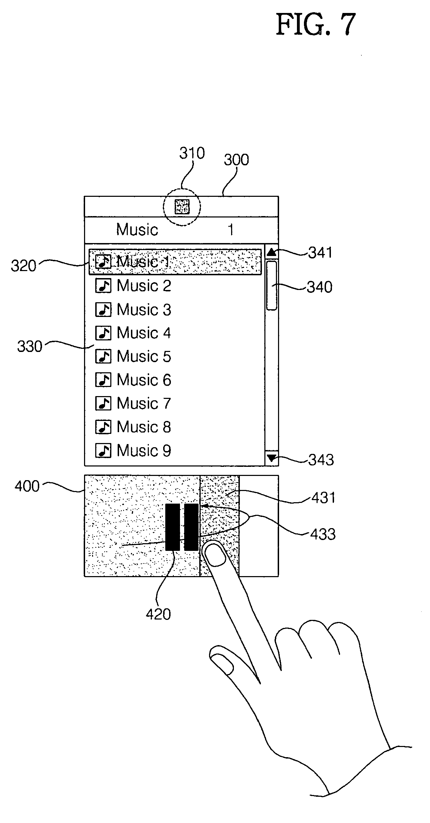

FIG. 7 illustrates the situation when a user changes a playback position of the current music file 320 by touching and dragging the progress bar 420 on the screen 400. Referring to FIG. 7, reference numeral 433 indicates the trajectory of a touch-and-drag motion performed by the user, and reference numeral 431 indicates the amount by which the size of the progress bar 420 is varied by the touch-and-drag motion. When the user touches and drags the progress bar 420 as indicated by reference numeral 433, the playback position of the current multimedia file 320 is moved forward or backward accordingly. In this manner, it is possible to perform a fast seek function during the play of a multimedia file.

According to the embodiment of FIGS. 4 through 7, the play of a multimedia file is controlled using the first display unit 130 and the second display unit 140. However, the first and second display units 130 and 140 may also be used for various control operations other than that set forth herein. For example, an enlarged image file may be displayed on the screen 400 of the second display unit 140, and a portion of the enlarged image file may be displayed on the screen 300 of the first display unit 130. Then, if a touch input is detected from the screen 400 of the second display unit 140, another portion of the enlarged image file corresponding to the detected touch input may be displayed on the screen 300 of the first display unit 130.

The present invention can be realized as computer-readable code written on a computer-readable recording medium. The computer-readable recording medium may be any type of recording device in which data is stored in a computer-readable manner. Examples of the computer-readable recording medium include a ROM, a RAM, a CD-ROM, a magnetic tape, a floppy disc, an optical data storage, and a carrier wave (e.g., data transmission through the Internet). The computer-readable recording medium can be distributed over a plurality of computer systems connected to a network so that computer-readable code is written thereto and executed therefrom in a decentralized manner. Functional programs, code, and code segments needed for realizing the present invention can be easily construed by one of ordinary skill in the art.

As described above, according to the present invention, it is possible to enable a user to easily and effectively control the play of a multimedia file by displaying a list of multimedia files that can be played on the screen of a first display unit and displaying a menu or icon for controlling the play of the multimedia file on the screen of a second display unit.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A method of controlling a mobile communication device having a first and second screen, the method comprising:
displaying a list of multimedia files on the first screen;
receiving an input for selecting at least one multimedia file from the list; and
playing the selected at least one multimedia file, the step of playing including displaying an icon on the second screen;
varying a visual characteristic of the icon according to a progress of play of the selected at least one multimedia file; and
controlling a play position of the selected at least one multimedia file in response to a user interaction with the icon.

2. The method of claim 1, wherein at least one of the first screen and the second screen comprises a touch screen, and the step of displaying an icon preferably comprises displaying a bar as said icon.

3. The method of claim 2, the step of controlling a play position of the selected at least one multimedia file in response to a user interaction with the icon comprising:
controlling the play position of the selected at least one multimedia file in response to a touch operation or a touch-and-drag operation performed on the bar.

4. The method of claim 2 or 3, further comprising:
copying a subset of the selected at least one multimedia file in response to a touch operation or a touch-and-drag operation performed on the bar.

5. The method of claim 2, 3 or 4, wherein the step of displaying a bar having a visual characteristic that varies according to the progress of play of the selected at least one multimedia file comprises:
varying one of a color and a three dimensional characteristic of the bar according to the progress of play of the selected at least one multimedia file.

6. The method of any one of claims 2 to 5, further comprising:
displaying one or more control icons on the touch screen; and
controlling the progress of play of the selected at least one multimedia file via the one or more icons.

7. The method of any one preceding claim, further comprising:
displaying a scroll bar on the first screen and scrolling the list with the scroll bar; and/or displaying an icon on the first screen indicating that information regarding the progress of play of the selected at least one multimedia file is currently being displayed on the second screen.

8. The method of any one preceding claim, wherein the at least one multimedia file comprises one of:
a music file; and
a video file.

9. A mobile communication device, comprising:
a first screen;
a second screen; and
a controller operatively connected to the first and second screen, the controller configured to
display a list of multimedia files on the first screen;
select at least one of the multimedia files in response to a user input;
play the selected at least one multimedia file;
display an icon on the second screen;
vary a visual characteristic of the icon according to a progress of play of the selected at least one multimedia file; and
control a play position of the selected at least one multimedia file in response to a user interaction with the icon.

10. The mobile communication device of claim 9, further comprising:
a memory operatively connected to the controller and configured to store the multimedia files.

11. The mobile communication device of claim 9 or 10, wherein at least one of the first screen and the second screen comprises a touch screen.

12. The mobile communication device of any one of claims 9 to 11, wherein the controller is further configured to display a bar as the icon and
preferably perform at least one of:
controlling a play position of the selected at least one multimedia file in response to a touch operation or a touch-and-drag operation performed on the bar;
copying a subset of the selected at least one multimedia file in response to a touch operation or a touch-and-drag operation performed on the bar;
varying one of a color and a three dimensional characteristic of the bar according to the progress of play of the selected at least one multimedia file;
displaying a scroll bar on the first screen, and to scroll through the list in response to a user input to the scroll bar;
displaying one or more control icons on the touch screen, and controlling the progress of play of the selected at least one multimedia file in response to a user manipulation of the one or more icons; and
displaying on the first screen an icon indicating that the second screen is currently displaying information regarding the progress of play of the selected at least one multimedia file.

13. The mobile communication device of any one of claims 9 to 12, wherein the at least one multimedia file comprises one of a music file and a video file, the mobile communication device comprising:
a sound processor configured to play audio associated with the one of a music file and a video file.

14. The mobile communication device of any one of claims 9 to 13, further comprising:
a first body; and
a second body connected to the first body via a connection device configured to open or shut the mobile communication device by flipping one of the first and second bodies relative to another of the first and second bodies, wherein
the first screen is disposed in the first body and the second screen is disposed in the second body.

15. The mobile communication device of any one of claims 9 to 14, further comprising:
a first body; and
a second body connected to the first body via a connection device configured to slide open or shut the mobile communication device by sliding one of the first and second bodies relative to another of the first and second bodies, wherein
the first screen is disposed in the first body and the second screen is disposed in the second body.
